# EUROPEAN PATENT SPECIFICATION

(11) **EP 3 515 794 B1**
(45) Date of publication and mention of the grant of the patent: **05.08.2020**
(21) Application number: 17787624.0
(22) Date of filing: 19.09.2017
(51) Int. Cl.: B62D 33/06, B60R 3/02, B60R 3/00

(54) **CABIN FOR INDUSTRIAL VEHICLE COMPRISING AN EXTRACTABLE SIDE LADDER TO ALLOW ACCESS TO SAID CABIN**
KABINE FÜR EIN INDUSTRIEFAHRZEUG MIT EINER HERAUSZIEHBAREN SEITLICHEN LEITER ZUR ERMÖGLICHUNG DES ZUGANGS ZU DIESER KABINE
CABINE POUR VÉHICULE INDUSTRIEL COMPRENANT UNE ÉCHELLE LATÉRALE EXTRACTIBLE POUR PERMETTRE L'ACCÈS À LADITE CABINE

(30) Priority: 19.09.2016 IT 201600093806
(43) Date of publication of application: 31.07.2019
(73) Proprietor: Iveco S.p.A., 10156 Torino (IT)
(72) Inventor: ARMIGLIATO, Marco, 10153 Torino (IT); VERGANO, Raffaele, 10020 Cambiano (IT); CALAON, Ivan, 10125 Torino (IT)
(74) Representative: Bongiovanni, Simone
(86) International application number: PCT/IB2017/055674
(87) International publication number: WO 2018/051319

(56) References cited:
- WO-A1-98/40241
- DE-A1-102010 026 256
- JP-A- H08 332 900

## Description

### TECHNICAL FIELD

The present invention relates to a cabin for industrial vehicle provided with an extractable side ladder to allow access to the cabin.

### BACKGROUND ART

As already known, industrial vehicles are equipped with a cabin defined by a pair of vertical side walls, a horizontal base wall, a front wall housing a windshield, a rear wall and a substantially horizontal top wall. The cabin defines an approximately parallelepiped-shaped inner volume accessible through a pair of side openings arranged on the opposite sides of the cabin and formed on the side walls. The side openings are provided with doors hinged to the cabin and used to access a driving position and a passenger seat, respectively.

Modern industrial vehicles are characterized by their large size, in particular their height. For this reason, the side openings have a lower side access edge that is very far away from the plane supporting the industrial vehicle.

To allow access to the doors, industrial vehicles are equipped with seats opening on the portions of the cabin walls below the door; the base of these seats supports the foot of the vehicle's driver when he/she climbs into the cabin.

For example, the patent DE 10 2004 026 464 describes an industrial vehicle equipped with a raised cabin provided with a front wall and with two side walls, each of which is provided with a door. The access to the raised cabin is allowed by stairs formed by three overlapping steps extending from the side walls and bordered by curved sides.

WO9840241 describes a retractable stairway assembly for entering and exiting a vehicle with a cab. A stairway assembly is movable between a retracted position, in which the stairway is located beneath the cab, and an extended position, in which the stairway is exposed to allow entering and exiting the vehicle.

### DISCLOSURE OF INVENTION

The object of the present invention is to provide a cabin that allows easy access to the door.

The foregoing object is achieved by the present invention as it relates to an industrial vehicle in which a cabin is provided with at least one side opening that can be used to allow access to the cabin, and with a door moving with respect to the cabin about a substantially vertical hinge axis A arranged, in use, between a closing position, in which said door closes said side opening, and an opening position allowing access to the cabin through said side opening, characterized in that it comprises: an extractable ladder comprising a plurality of steps moving between a retracted rest position, in which said steps are housed in a seat formed in the cabin, and an extracted operating position, in which the steps project from a side wall of the cabin; said extractable ladder further comprising a top step arranged at an upper end of the ladder and being larger than the other steps; said top step being arranged below a lower edge of the side opening; said top step, when arranged in the operating position, acting as a landing to allow access to said side opening. It is further provided a guide, coupled to said door and allowing the movement of said door along a horizontal axis B perpendicular to the axis A so as to accomplish a rototranslating movement of the door that allows the door to move away from the side wall of the cabin while opening the door about the axis A and to move closer to the side wall of the cabin while closing the door.

### BRIEF DESCRIPTION OF THE DRAWINGS

The invention will now be illustrated with reference to the accompanying drawings representing a preferred embodiment thereof, wherein:
Figure 1 shows a schematic perspective view of an industrial vehicle provided with a cabin made in accordance with the requirements of the present invention and in a first operating position (opening position);
Figure 2 shows a schematic perspective view of an industrial vehicle with a cabin made in accordance with the requirements of the present invention and in a second operating position (closing position);
Figure 3 shows, in a top view, a detail of the cabin;
Figure 4 shows a perspective view of the detail of Figure 3 in the first operating position; and
Figure 5 shows a perspective view of the detail of Figure 3 in the second operating position.

### BEST MODE FOR CARRYING OUT THE INVENTION

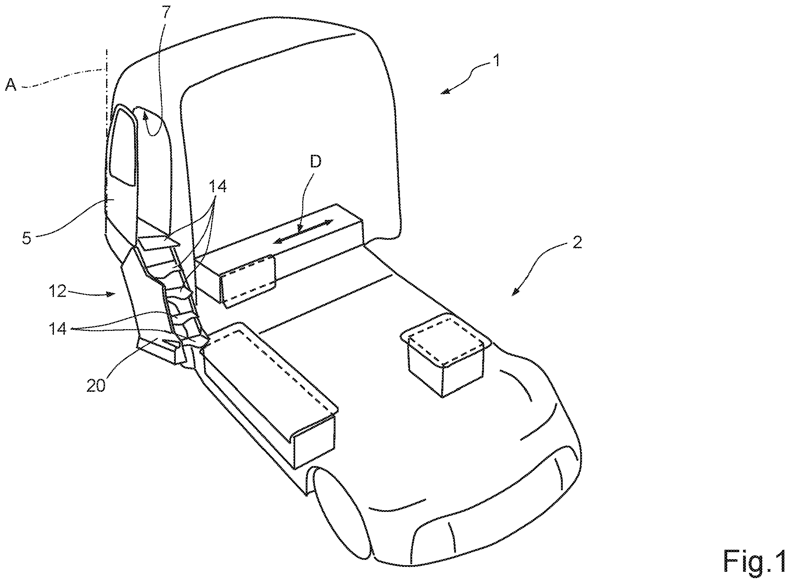

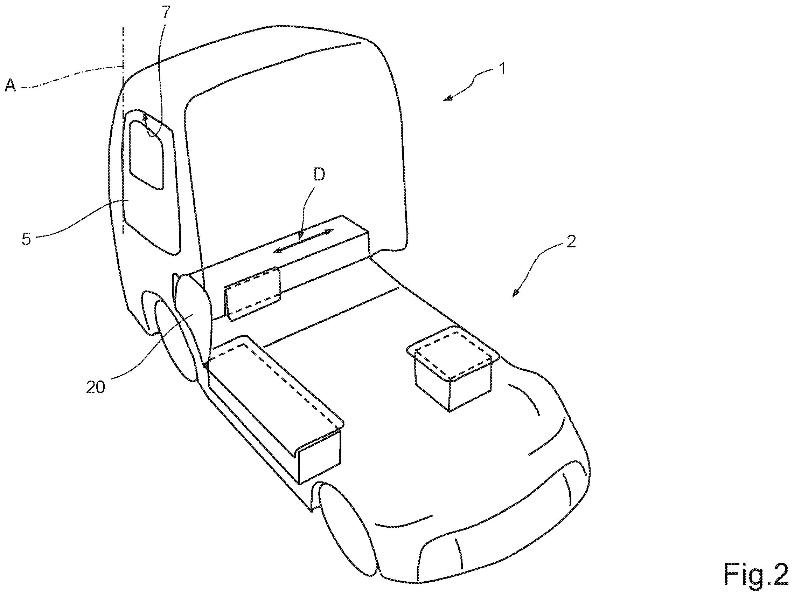

Figure 1 indicates with the reference number 1, as a whole, a cabin of an industrial vehicle 2 (schematically shown in Figures 1 and 2). The known cabin 1 is defined by a pair of vertical side walls, a horizontal base wall, a front wall housing a windshield, a rear wall and a substantially horizontal top wall. The cabin 1 defines an approximately parallelepiped-shaped inner volume accessible through a pair of side openings 7 (only one being visible in Figures 1 and 2) arranged on the opposite sides of the cabin 1 and formed on the side walls.

The side openings 7 are provided with doors 5 hinged to the cabin and used to have access to a driving position and to a passenger seat, respectively. As an alternative, there might be a single door to access the driving position.

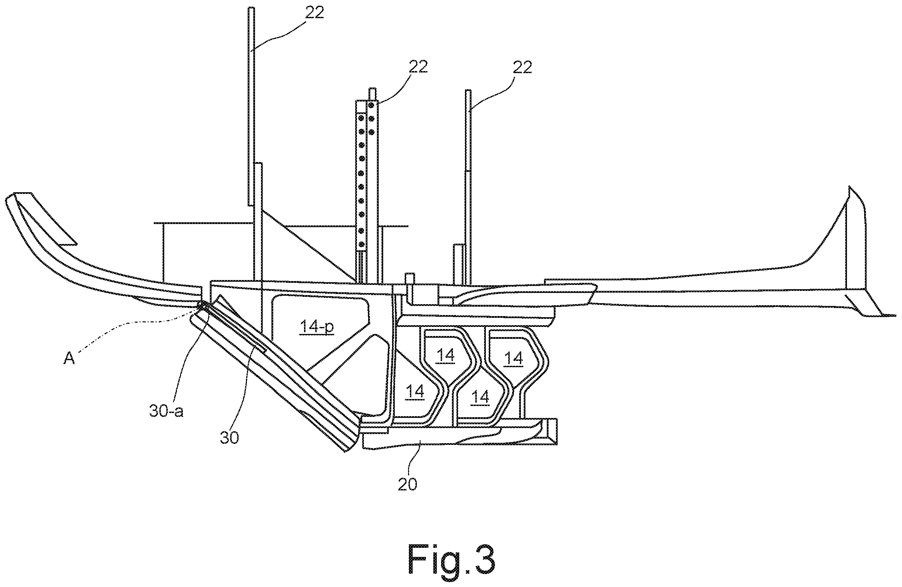

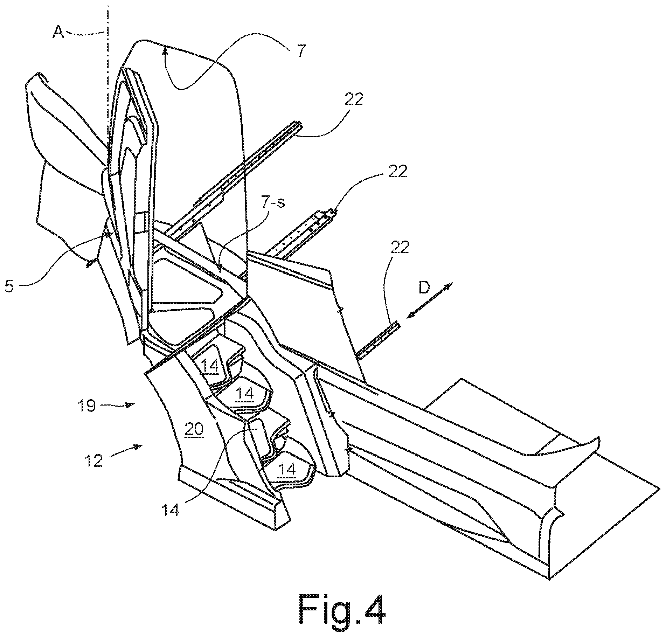

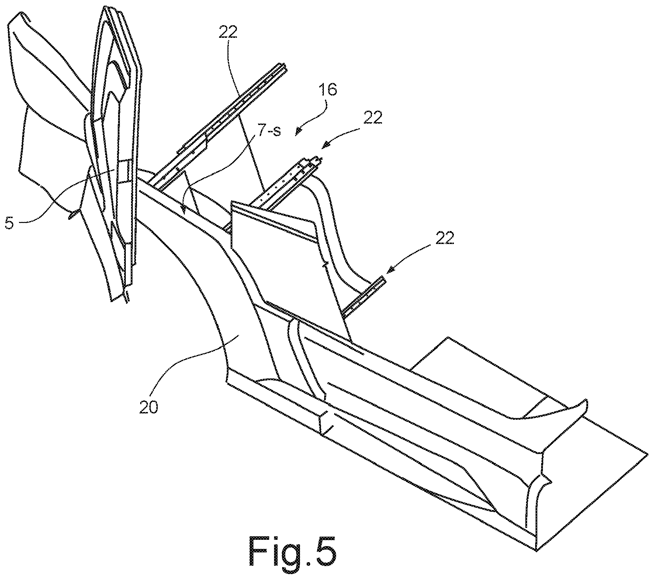

The door 5 of the cabin used to have direct access to the driving position is movable with respect to the cabin 1 about a substantially vertical hinge axis A arranged, in use, between a closing position (Figures 2 and 5), in which the door 5 closes the side opening 7, and an opening position (Figures 1, 4 and 3) in which the door 5 opens to allow access to the cabin through the side opening 7. According to the present invention, the cabin 1 is provided with an extractable ladder 12 comprising a plurality of steps 14 (five in the example, but the number may obviously vary) moving between a retracted rest position, in which the steps 14 are housed in a seat 16 made in the cabin 1, and an extracted operating position, in which the steps 14 project from a side wall of the cabin. The extractable ladder 12 further comprises a top step 14-p arranged at an upper end of the ladder and being larger than the other steps. The top step 14-p is arranged below a lower edge 7-s of the side opening (Figure 4); in this way, when arranged in the operating position, the top step 14-p acts as a landing to allow access to the side opening 7.

The extractable ladder 12 further comprises a side wall 20, which extends facing lower end sides of the steps 14. The side wall 20 has, in plan view, shape and size corresponding to the shape and size of the opening (Figure 2) with which the seat 16 communicates with the outside of the side wall of the cabin; said side wall 20 closes said opening of said seat when said ladder is arranged in said rest position and provides a side for the ladder when said ladder is arranged in said extracted operating position.

In the example shown, the side wall 20 has, in plan view, an approximately trapezoidal shape.

In more detail, the ladder 12 comprises a supporting structure 19 for supporting said steps and side wall 20 made of tubular sections welded to each other by means of known techniques. The supporting structure 19 is movable along rectilinear guides 22, which are carried by the cabin 1 and extend along a direction D transverse to the side walls of the cabin 1 and to the longitudinal axis of the vehicle. It is further provided a reversible actuator (e.g. pneumatic, not shown) for moving the supporting structure 19 along the guides 22 to move the ladder 12 from the retracted rest position to the extracted operating position and vice versa, from the extracted operating position to the retracted rest position.

The door 5 is provided with a straight guide 30, housed in a cavity formed in the body of the door, and with an end portion 30-a hinged to a vertical edge of the opening 7 to rotate about the vertical hinge axis A of the door 5. A slide is slidable along the guide 30 under the thrust of a first actuator (e.g. electric, not shown) with reversible linear motion. The slide is integral to the door, which is movable with reversible motion along the guide along the axis B.

The movement of the first actuator controlling the movement of the door along the axis B is controlled during the movement of the door about the axis A so as to accomplish a rototranslating movement of the door that allows the door to move away from the side wall of the cabin while opening the door by rotating it about the axis A, and to move closer to the side wall of the cabin while closing the door by rotating it about the axis A.

Conveniently, the movement of the door about the axis A is accomplished by a second actuator (not shown) controlled by an electronic control unit 35, which also controls the first actuator that accomplishes the movement of the door along the axis B so that after the complete opening of the door 5, i.e. when a maximum opening angle α_{MAX} is reached, the door (5) is translated along the axis B.

Alternatively, the electronic control unit 35 may control the first actuator that accomplishes the movement of the door along the axis B so that a predetermined position of the slide along the straight guide corresponds to each angular opening position α of the door about the axis A and with respect to the plane defined by the side wall of the cabin.

In both cases, when the door 5 reaches the maximum opening angle α_{MAX}, the front vertical edge of the door (the one facing the hinge axis A) has moved away from the side walls of a few centimetres; such displacement prevents any contact between the top step 14-p and the door 5 that is on one side of the top step 14-p.

The electronic control unit 35 also controls the actuators accomplishing the movement of the ladder 12 along the straight guides 22, so that the extractable ladder 12 is available in the extracted operating position when the door is in the open position and is available in the retracted rest position when the door is in the closing position. In more detail, the movement of the ladder as it comes out of the seat 16 is synchronized with the opening movement of the door 5 and the movement of the ladder 12 as it re-enters the seat 16 is synchronized with the closing movement of the door 5.

## Claims

1. An industrial vehicle wherein a cabin (1) is provided with at least one side opening (7) allowing access to the inside of the cabin, and with a door (5) moving with respect to the cabin about a substantially vertical hinge axis A arranged, in use, between a closing position, in which said door (5) closes said side opening (7), and an opening position allowing access to the cabin through said side opening (7),
the vehicle comprising
an extractable ladder (12) comprising a plurality of steps (14) moving between a retracted rest position, in which said steps (14) are housed in a seat (16) provided in the cabin, and an extracted operating position, in which the steps (14) project from a side wall of said cabin;
said extractable ladder further comprising a top step (14-p) arranged at an upper end of the ladder and being larger than the other steps (14); said top step (14-p) being arranged below a lower edge (7-s) of the side opening (7); said top step (14-p), when arranged in the operating position, acting as a landing to allow access to said side opening (7);
**characterized in that** a guide (30) is further provided, which is coupled to said door (5) and allows the movement of said door along a horizontal axis B perpendicular to the axis A so as to accomplish a rototranslating movement of the door, which allows the door to move away from the side wall of the cabin while opening the door about the axis A, and to move closer to the side wall of the cabin while closing the door.

2. A vehicle according to claim 1, wherein said extractable ladder (12) comprises a side wall (20), which extends facing shorter end sides of said steps (14), said side wall (20) having, in plan view, shape and size corresponding to the shape and size of the opening through which said seat (16) communicates with the outside of the side wall of the cabin; said side wall (20) closing said opening of said seat when said ladder is arranged in said rest position and providing a side for the ladder when said ladder (12) is arranged in said extracted operating position.

3. A vehicle according to claim 2, wherein the side wall has, in plan view, an approximately trapezoidal shape.

4. A vehicle according to claim 2 or 3, wherein said ladder comprises a supporting structure (19) for supporting said steps (14) and said side wall (20); said supporting structure (19) being movable with reversible motion under the thrust of actuators along rectilinear guides (22) which are carried by said cabin and extend in a direction (D) transverse to the side walls of said cabin (1) and to the longitudinal axis of said vehicle.

5. A vehicle according to any one of the preceding claims, wherein said guide (30) is rectilinear, is housed in a cavity provided in the body of the door and is provided with an end portion (30-a) hinged to a vertical edge of the opening (7) to rotate about the vertical hinge axis A of the door (5); a slide slides along the guide under the thrust of first actuators with reversible linear motion; said slide is integral with the door, which is movable with reversible motion along the guide along the axis B.

6. A vehicle according to claim 5, wherein electronic control means (35) are provided for controlling first actuators and second actuators accomplishing the angular movement of the door about the axis A; said electronic control means (35) control said first and second actuators so that each door opening angular position α about the axis A and with respect to the plane defined by the side wall of the cabin corresponds to a predefined position of the slide along the rectilinear guide.

7. A vehicle according to claim 5, wherein electronic control means (35) are provided for controlling the first and second actuators accomplishing the door angular movement about the axis A; said electronic control means (35) control said first and second actuators so that after a complete opening of the door (5), when a maximum opening angle α_{MAX} is reached, the door (5) is translated along the axis B.

8. A vehicle according to any one of the preceding claims, wherein control means are provided that are designed to allow the movement of the ladder (12) with respect to the cabin so that the extractable ladder (12) is available in said extracted operating position when the door is in the opening position and is available in the retracted rest position when the door is in the closing position.

9. A vehicle according to claim 8, wherein the movement of the ladder as it comes out of the seat is synchronized with the opening movement of the door and the movement of the ladder as it re-enters the seat is synchronized with the closing movement of the door.

## Patentansprüche

1. Nutzfahrzeug, bei welchem eine Kabine (1) mit mindestens einer seitlichen Öffnung (7) ausgeführt ist, die Zugang zum Inneren der Kabine ermöglicht, und mit einer Tür (5) ausgeführt ist, die in Bezug auf die Kabine über eine im Wesentlichen vertikale Gelenkachse A beweglich ist, angeordnet, in Benutzung, zwischen einer Schließposition, in der die Tür (5) die seitliche Öffnung (7) verschließt, und einer offenen Position, die Zugang zur Kabine durch die seitliche Öffnung (7) ermöglicht, wobei das Fahrzeug umfasst:
eine ausziehbare Leiter (12), umfassend eine Mehrzahl von Stufen (14), die zwischen einer eingezogenen Ruhestellung, in der die Stufen (14) in einer in der Kabine vorgesehenen Aufnahme (16) aufgenommen sind, und einer ausgezogenen Betriebsstellung, in der die Stufen (14) sich von einer Seitenwand der Kabine aus erstrecken, verfahrbar ist;
wobei die ausziehbare Leiter ferner eine oberste Stufe (14-p) umfasst, angeordnet an einem oberen Ende der Leiter und größer ausgeführt als die anderen Stufen (14); wobei die oberste Stufe (14-p) unterhalb eines unteren Randes (7-s) der seitlichen Öffnung (7) angeordnet ist; wobei die obere Stufe (14-p), wenn sie in der Betriebsstellung angeordnet ist, als ein Absatz fungiert, um Zugang zu der seitlichen Öffnung (7) zu ermöglichen;
**dadurch gekennzeichnet, dass** ferner eine Führung (30) vorgesehen ist, die mit der Tür (5) gekoppelt ist und die Bewegung der Tür entlang einer horizontalen Achse B, senkrecht zur Achse A, ermöglicht, um eine Dreh-Translationsbewegung der Tür auszuführen, welche Bewegung es der Tür ermöglicht, sich von der Seitenwand der Kabine wegzubewegen, während die Tür sich um die Achse A öffnet, und um sich der Seitenwand der Kabine anzunähern, während die Tür schließt.

2. Fahrzeug nach Anspruch 1, bei welchem die ausziehbare Leiter (12) eine Seitenwand (20) umfasst, die sich zugewandt den kürzeren Seitenenden der Stufen (14) erstreckt, wobei die Seitenwand (20), in Draufsicht, Form und Größe in Bezug zu der Form und Größe der Öffnung hat, durch welche die Aufnahme (16) mit der Au-ßenseite der Seitenwand der Kabine in Verbindung steht; wobei die Seitenwand (20) die Öffnung der Aufnahme verschließt, wenn die Leiter in der Ruhestellung angeordnet ist und eine Seite für die Leiter ist, wenn die Leiter (12) in der ausgezogenen Betriebsstellung angeordnet ist.

3. Fahrzeug nach Anspruch 2, wobei die Seitenwand, in Draufsicht, eine annähernd trapezoide Form hat.

4. Fahrzeug nach Anspruch 2 oder 3, wobei die Leiter eine Tragstruktur (19) umfasst, um die Stufen (14) und die Seitenwand (20) zu stützen; wobei die Tragstruktur (19) mit einer reversiblen Bewegung unter dem Schub von Aktuatoren entlang geradliniger Führungen (22) beweglich ist, wobei die Führungen von der Kabine getragen werden und sich in einer Richtung (D) erstrecken, die transversal zu der Seitenwand der Kabine (1) und zu der Längsachse des Fahrzeugs ist.

5. Fahrzeug nach einem der vorstehenden Ansprüche, wobei die Führung (30) geradlinig ist, in einer in dem Korpus der Tür vorgesehenen Ausnehmung aufgenommen ist und mit einem Endabschnitt (30-a) an einen vertikalen Rand der Öffnung (7) angelenkt ist, zur Rotation um die vertikale Gelenkachse A der Tür (5); wobei eine Gleitschiene unter dem Schub von ersten Aktuatoren in reversibler linearer Bewegung entlang der Führung gleitet; wobei die Gleitschiene einstückig mit der Tür ist, die mit reversibler Bewegung entlang der Führung entlang der Achse B beweglich ist.

6. Fahrzeug nach Anspruch 5, wobei elektronische Steuermittel (35) zur Steuerung erster und zweiter Aktuatoren vorgesehen sind, wobei die Aktuatoren die Winkelbewegung der Tür um die Achse A durchführen; wobei die elektronischen Steuermittel (35) die ersten und zweiten Aktuatoren so steuern, dass jede Türöffnungswinkelposition α um die Achse A und in Bezug auf die Ebene, welche von der Seitenwand der Kabine definiert wird, einer vordefinierten Position der Gleitschiene entlang der geradlinigen Führung entspricht.

7. Fahrzeug nach Anspruch 5, wobei elektronische Steuermittel (35) zur Steuerung der ersten und zweiten Aktuatoren vorgesehen sind, welche die Winkelbewegung der Tür um die Achse A durchführen; wobei die elektronischen Steuermittel (35) die ersten und zweiten Aktuatoren so steuern, dass nach einer vollständigen Öffnung der Tür (5), wenn ein maximaler Öffnungswinkel αₘₐₓ erreicht ist, die Tür (5) entlang der Achse B verschoben wird.

8. Fahrzeug nach einem der vorstehenden Ansprüche, wobei Steuermittel vorgesehen sind, die ausgeführt sind, um die Bewegung der Leiter (12) in Bezug auf die Kabine so zu ermöglichen, dass die ausziehbare Leiter (12) in der ausgezogenen Betriebsstellung verfügbar ist, wenn die Tür in der offenen Position ist, und in der eingezogenen Ruhestellung verfügbar ist, wenn die Tür in der geschlossenen Position ist.

9. Fahrzeug nach Anspruch 8, wobei die Bewegung der Leiter, während sie aus der Aufnahme kommt, mit der Öffnungsbewegung der Tür synchronisiert ist und die Bewegung der Leiter, während sie wieder in die Aufnahme eintritt, mit der Schließbewegung der Tür synchronisiert ist.

## Revendications

1. Véhicule industriel dans lequel une cabine (1) est pourvue d'au moins une ouverture latérale (7) permettant l'accès à l'intérieur de la cabine, et d'une porte (5) bougeant par rapport à la cabine autour d'un axe d'articulation sensiblement vertical A agencé, lors de l'utilisation, entre une position de fermeture, dans laquelle ladite porte (5) ferme ladite ouverture latérale (7), et une position d'ouverture permettant l'accès à la cabine par ladite ouverture latérale (7),
le véhicule comprenant :
une échelle extractible (12) comprenant une pluralité de marches (14) bougeant entre une position de repos rétractée, dans laquelle lesdites marches (14) sont logées dans un siège (16) situé dans la cabine, et une position de fonctionnement extraite, dans laquelle les marches (14) se projettent depuis une paroi latérale de ladite cabine ;
ladite échelle extractible comprenant en outre une marche haute (14-p) agencée au niveau d'une extrémité supérieure de l'échelle et étant plus grande que les autres marches (14) ; ladite marche haute (14-p) étant agencée sous un bord inférieur (7-s) de l'ouverture latérale (7) ; ladite marche haute (14-p), lorsqu'elle est agencée dans la position de fonctionnement, servant de palier pour permettre l'accès à ladite ouverture latérale (7) ;
**caractérisé en ce qu'**un guide (30) est en outre prévu, lequel est accouplé à ladite porte (5) et permet le déplacement de ladite porte le long d'un axe horizontal B perpendiculaire à l'axe A de manière à accomplir un déplacement de rototranslation de la porte, ce qui permet à la porte d'être éloignée de la paroi latérale de la cabine lors de l'ouverture de la porte autour de l'axe A, et de se rapprocher de la paroi latérale de la cabine lors de la fermeture de la porte.

2. Véhicule selon la revendication 1, dans lequel ladite échelle extractible (12) comprend une paroi latérale (20), qui s'étend en faisant face à des côtés d'extrémité plus courts desdites marches (14), ladite paroi latérale (20) ayant, sur une vue en plan, une forme et une taille correspondant à la forme et à la taille de l'ouverture par laquelle ledit siège (16) communique avec l'extérieur de la paroi latérale de la cabine ; ladite paroi latérale (20) fermant ladite ouverture dudit siège lorsque ladite échelle est agencée dans ladite position de repos et fournissant un côté pour l'échelle lorsque ladite échelle (12) est agencée dans ladite position de fonctionnement extraite.

3. Véhicule selon la revendication 2, dans lequel la paroi latérale présente, sur une vue en plan, une forme approximativement trapézoïdale.

4. Véhicule selon la revendication 2 ou 3, dans lequel ladite échelle comprend une structure de support (19) pour supporter lesdites marches (14) et ladite paroi latérale (20) ; ladite structure de support (19) étant mobile avec un mouvement réversible sous la poussée d'actionneurs le long de guides rectilignes (22) qui sont portés par ladite cabine et s'étendent dans une direction (D) transversale aux parois latérales de ladite cabine (1) et à l'axe longitudinale dudit véhicule.

5. Véhicule selon l'une quelconque des revendications précédentes, dans lequel ledit guide (30) est rectiligne, est logé dans une cavité située dans le corps de la porte et est pourvu d'une partie d'extrémité (30-a) s'articulant sur un bord vertical de l'ouverture (7) pour tourner autour de l'axe d'articulation vertical A de la porte (5) ; un coulisseau coulisse le long du guide sous la poussée de premiers actionneurs avec un mouvement linéaire réversible ; ledit coulisseau est solidaire de la porte, qui est mobile avec un mouvement réversible le long du guide le long de l'axe B.

6. Véhicule selon la revendication 5, dans lequel un moyen de commande électronique (35) est prévu pour commander des premiers actionneurs et seconds actionneurs accomplissant le déplacement angulaire de la porte autour de l'axe A ; ledit moyen de commande électronique (35) commande lesdits premiers et seconds actionneurs de telle sorte que chaque position angulaire d'ouverture de porte α autour de l'axe A et par rapport au plan défini par la paroi latérale de la cabine correspond à une position prédéfinie du coulisseau le long du guide rectiligne.

7. Véhicule selon la revendication 5, dans lequel un moyen de commande électronique (35) est prévu pour commander les premiers et seconds actionneurs accomplissant le déplacement angulaire de la porte autour de l'axe A ; ledit moyen de commande électronique (35) commande lesdits premiers et seconds actionneurs de telle sorte que, après une ouverture complète de la porte (5), lorsqu'un angle d'ouverture maximum α_{MAX} est atteint, la porte (5) est déplacée le long de l'axe B.

8. Véhicule selon l'une quelconque des revendications précédentes, dans lequel un moyen de commande est prévu, lequel est conçu pour permettre le déplacement de l'échelle (12) par rapport à la cabine de telle sorte que l'échelle extractible (12) est disponible dans ladite position de fonctionnement extraite lorsque la porte est dans la position d'ouverture et est disponible dans la position de repos rétractée lorsque la porte est dans la position de fermeture.

9. Véhicule selon la revendication 8, dans lequel le déplacement de l'échelle quand elle sort du siège est synchronisé avec le déplacement d'ouverture de la porte et le déplacement de l'échelle quand elle re-rentre dans le siège est synchronisé avec le déplacement de fermeture de la porte.
